(19) Europäisches Patentamt
European Patent Office
Office européen des brevets

(11) **EP 1 683 324 B1**

(12) **EUROPÄISCHE PATENTSCHRIFT**

(45) Veröffentlichungstag und Bekanntmachung des Hinweises auf die Patenterteilung:
**28.03.2018 Patentblatt 2018/13**

(21) Anmeldenummer: **04804525.6**

(22) Anmeldetag: **10.11.2004**

(51) Int Cl.:
*H04L 29/06* (2006.01)    *H04W 12/06* (2009.01)
*H04W 12/04* (2009.01)    *H04W 84/12* (2009.01)

(86) Internationale Anmeldenummer:
**PCT/EP2004/052909**

(87) Internationale Veröffentlichungsnummer:
**WO 2005/046157 (19.05.2005 Gazette 2005/20)**

(54) **VERFAHREN ZUR SICHERUNG DES DATENVERKEHRS ZWISCHEN EINEM ERSTEN ENDGERÄT UND EINEM ERSTEN NETZ SOWIE EINEM ZWEITEN ENDGERÄT UND EINEM ZWEITEN NETZ**

METHOD FOR SAFEGUARDING DATA TRANSMISSION BETWEEN A FIRST TERMINAL AND A FIRST NETWORK AND BETWEEN A SECOND TERMINAL AND A SECOND NETWORK

PROCEDE DE SAUVEGARDE DE TRANSFERT DE DONNEES ENTRE UN PREMIER TERMINAL ET UN PREMIER RESEAU ET ENTRE UN SECOND TERMINAL ET UN SECOND RESEAU

(84) Benannte Vertragsstaaten:
**AT BE BG CH CY CZ DE DK EE ES FI FR GB GR HU IE IS IT LI LU MC NL PL PT RO SE SI SK TR**

(30) Priorität: **11.11.2003   DE 10352538**
**16.12.2003   DE 10358987**

(43) Veröffentlichungstag der Anmeldung:
**26.07.2006   Patentblatt 2006/30**

(73) Patentinhaber: **Siemens Aktiengesellschaft**
**80333 München (DE)**

(72) Erfinder: **HORN, Günther**
**81541 München (DE)**

(56) Entgegenhaltungen:
**WO-A-03/084265      US-A1- 2002 169 958**

**Beschreibung**

Die Erfindung betrifft ein Verfahren zur Sicherung des Datenverkehrs zwischen einem ersten Endgerät und einem ersten Netz sowie einem zweiten Endgerät und einem zweiten Netz. Ferner betrifft die Erfindung ein entsprechendes erstes und ein entsprechendes zweites Endgerät, mit denen das erfindungsgemäße Verfahren durchführbar ist.

Heutzutage besteht für den Benutzer eines Mobiltelefons das Bedürfnis, sich über ein geeignetes Zugangsnetz nicht nur einen Zugang zu einem Mobilfunknetz, sondern auch einen Zugang zu weiteren Netzen, wie z.B. dem Internet, zu verschaffen. Bei dem Zugang zum Internet ist es insbesondere wünschenswert, dass die übertragenen Daten nicht an dem Mobiltelefon, sondern an einem weiteren Endgerät, wie z.B. einem Laptop, angezeigt werden.

Aus dem Stand der Technik sind Verfahren bekannt, bei denen sich ein erstes Endgerät in der Form eines Mobiltelefons, das ein SIM- oder USIM-Modul enthält (SIM = Subscriber Identity Module; USIM = Universal Subscriber Identity Module), über eine lokale Schnittstelle mit einem zweiten Endgerät in der Form eines Laptops verbindet, wobei der Laptop einen Zugang zu einem weiteren Netz, wie z.B. einem WLAN-Netz und/oder dem Internet, ermöglicht. Das zweite Endgerät wird hierbei an dem weiteren Netz über ein Authentifikationsprotokoll authentifiziert, wobei in dem Protokoll Schlüssel verwendet werden, die auf das SIM- bzw. USIM-Modul zurückgehen. Als geeignete Authentifikationsprotokolle werden beispielsweise die Protokolle EAP-SIM (EAP = Extensible Authentication Protocol; SIM = Subscriber Identity Module; siehe Dokument [1]) oder EAP-AKA (EAP = Extensible Authentication Protocol; AKA = Authentication Key Agreement; siehe Dokument [2]) eingesetzt. Das Protokoll EAP-SIM wird hierbei für GSM-Mobiltelefone verwendet und das Protokoll EAP-AKA wird für UMTS-Mobiltelefone eingesetzt.

Die Authentifikationsprotokolle EAP-SIM und EAP-AKA erfordern einerseits eine Kommunikation mit dem Netz sowie andererseits die Beteiligung des SIM- oder USIM-Moduls bei der Authentifikation. Daher ist sowohl das zweite Endgerät als auch das erste Endgerät an der Ausführung des Authentifikationsprotokolls beteiligt. Es ist somit ein Datenaustausch zwischen dem zweiten Endgerät und dem ersten Endgerät über eine lokale Schnittstelle, z.B. eine Bluetooth-Schnittstelle, nötig. Dabei werden zum Zwecke der Authentifikation über diese Schnittstelle mittels eines geeigneten Profils Authentifikationsdaten übertragen. Aus dem Stand der Technik sind als geeignete Profile insbesondere Bluetooth-Profile bekannt, wie z.B. das Bluetooth SIM Access Profile (siehe Dokument [3]). Über die lokale Schnittstelle werden erste Sitzungsschlüssel übertragen, welche eigentlich zur Kommunikation des Mobiltelefons mit dem entsprechenden Mobilfunknetz dienen. Aus diesen ersten Sitzungsschlüsseln werden dann im zweiten Endgerät neue Sitzungsschlüssel berechnet, mit denen die Authentifikation über das Authentifikationsprotokoll abläuft. Es erweist sich hierbei als problematisch, dass die ersten Sitzungsschlüssel im zweiten Endgerät bekannt sind. Somit hat ein Angreifer, der Kontrolle über das zweite Endgerät bekommt, auch Zugriff auf die ersten Sitzungsschlüssel und kann den Benutzer der ersten Endgeräts impersonieren, beispielsweise kann er Gespräche auf Kosten des Benutzers im ersten Netz führen.

Aufgabe der Erfindung ist es deshalb, ein Verfahren zur Sicherung des Datenverkehrs zwischen einem ersten Endgerät und einem ersten Netz sowie einem zweiten Endgerät und einem zweiten Netz zu schaffen, welches erhöhten Sicherheitsanforderungen genügt. Insbesondere soll das Verfahren gegenüber dem oben geschilderten Angriff schützen.

Diese Aufgabe wird durch die unabhängigen Patentansprüche gelöst. Weiterbildungen der Erfindung sind in den abhängigen Ansprüchen definiert.

Bei dem erfindungsgemäßen Verfahren wird ein erstes Endgerät verwendet, welches mit Hilfe eines oder mehrerer erster Sitzungsschlüssel in einem ersten Netz kommunizieren kann, sowie ein zweites Endgerät, welches mit Hilfe eines oder mehrerer zweiter Sitzungsschlüssel in einem zweiten Netz kommunizieren kann. In dem Verfahren wird das erste Endgerät mit dem zweiten Endgerät über eine lokale Schnittstelle verbunden. Im ersten Endgerät werden der oder die ersten Sitzungsschlüssel ermittelt und der oder die zweiten Sitzungsschlüssel aus den ersten Sitzungsschlüsseln abgeleitet. Der oder die zweiten Sitzungsschlüssel werden über die lokale Schnittstelle mittels eines Sicherheitsprotokolls an das zweite Endgerät übertragen. Das zweite Endgerät wird schließlich mit Hilfe des oder der zweiten Sitzungsschlüssel und/oder mit Hilfe aus dem oder den zweiten Sitzungsschlüsseln abgeleiteter Schlüssel über ein Authentifikationsprotokoll an dem zweiten Netz authentifiziert. Das erfindungsgemäße Verfahren beruht auf der Idee, dass dem zweiten Endgerät nicht der oder die ersten Sitzungsschlüssel zur Verfügung gestellt werden. Deshalb werden Funktionen, die eigentlich vom zweiten Endgerät ausgeführt werden, auf das erste Endgerät verlagert. Insbesondere werden im ersten Endgerät bereits der oder die zweiten Sitzungsschlüssel aus den ersten Sitzungsschlüsseln abgeleitet. Somit kann ein Angreifer, der Kontrolle über das zweite Endgerät erhält, nicht mehr auf die ersten Sitzungsschlüssel zugreifen und sich somit keinen Zugang zum ersten Netz verschaffen.

In einer bevorzugten Variante ist das Authentifikationsprotokoll derart ausgestaltet, dass als Teil des Protokolls die aus dem oder den zweiten Sitzungsschlüsseln abgeleiteten Schlüssel erzeugt werden und zum Schutz der Nachrichten des Authentifikationsprotokolls und/oder zum Schutz der Kommunikation im zweiten Netz eingesetzt werden.

Das erste Netz ist in einer Ausführungsform ein GSM-Netz und der oder die ersten Sitzungsschlüssel werden hierbei in einem SIM-Modul auf dem ersten Endgerät erzeugt. In diesem Fall ist das Authentifikationsprotokoll vorzugsweise das Protokoll EAP-SIM (EAP = Extensible Authentication Protocol; SIM = Subscriber Identity Module). In einer alternativen Ausführungsform ist das erste Netz ein UMTS-Netz und der oder die ersten Sitzungsschlüssel werden in einem USIM-Modul (USIM = Universal Subscriber Identity Module) auf dem ersten Endgerät erzeugt. In diesem Fall ist das Authentifikationsprotokoll vorzugsweise EAP-AKA (EAP = Extensible Authentication Protocol; AKA = Authentication Key Agreement).

Die lokale Schnittstelle zwischen dem ersten und dem zweiten Endgerät wird vorzugsweise über eine drahtlose Schnittstelle realisiert. Hierbei kommt insbesondere ein Bluetooth-und/oder Infrarot-Schnittstelle in Betracht.

Das zweite Netz, das im erfindungsgemäßen Verfahren mit dem zweiten Endgerät kommuniziert, ist vorzugsweise ein lokales Netz, insbesondere ein LAN- und/oder WLAN-Netz. Das lokale Netz kann wiederum mit weiteren Netzen, wie z.B. dem Internet, verbunden sein.

In einer weiteren bevorzugten Variante der Erfindung ist das Sicherheitsprotokoll, mit dem Informationen zwischen dem ersten und dem zweiten Endgerät ausgetauscht werden, wie folgt ausgestaltet:

- eine erste Signalisierungsnachricht von dem zweiten Endgerät wird zu dem ersten Endgerät gesendet, wobei mit der ersten Signalisierungsnachricht die Ableitung des oder der zweiten Sitzungsschlüssel aus den ersten Sitzungsschlüsseln im ersten Endgerät ausgelöst wird;

- in Antwort auf die erste Signalisierungsnachricht wird eine zweite Signalisierungsnachricht von dem ersten Endgerät zum zweiten Endgerät gesendet, wobei mit der zweiten Signalisierungsnachricht der oder die zweiten Sitzungsschlüssel übermittelt werden.

Hierdurch werden auf einfache Weise der oder die zweiten Sitzungsschlüssel von dem ersten Endgerät auf das zweite Endgerät übermittelt. In einer bevorzugten Variante werden hierbei mit der ersten Signalisierungsnachricht Parameter aus dem Authentifikationsprotokoll übertragen. Vorzugsweise ist das Sicherheitsprotokoll ein erweitertes Bluetooth-SIM-Access-Profile-Protokoll, das die erste und die zweite Signalisierungsnachricht enthält. In der speziellen Beschreibung werden die genauen Spezifikationen und Anforderungen an ein solches erweitertes Protokoll definiert.

Neben dem erfindungsgemäßen Datenverkehrssicherungsverfahren umfasst die Erfindung ferner ein Endgerät, welches derart ausgestaltet ist, dass es in dem erfindungsgemäßen Verfahren als erstes Endgerät eingesetzt werden kann. Das Endgerät umfasst hierbei vorzugsweise Mittel zum Ermitteln des oder der ersten Sitzungsschlüssel und Mittel zum Ableiten des oder der zweiten Sitzungsschlüssel aus den ersten Sitzungsschlüsseln.

Darüber hinaus umfasst die Erfindung ferner ein Endgerät, welches derart ausgestaltet ist, dass es im erfindungsgemäßen Verfahren als zweites Endgerät eingesetzt werden kann.

Ausführungsbeispiele der Erfindung werden nachfolgend anhand der beigefügten Zeichnung detailliert erläutert.

Es zeigt:

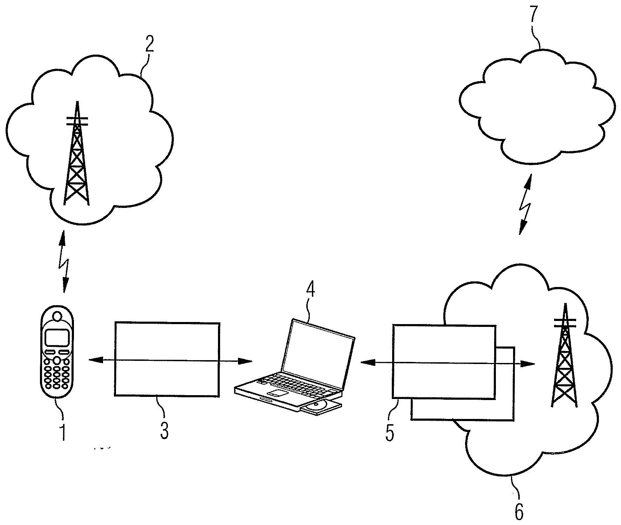

Figur 1    beispielhaft ein Szenario, in dem das erfindungsgemäße Datenverkehrssicherungsverfahren angewendet wird.

Figur 1 zeigt ein erstes Endgerät in der Form eines Mobiltelefons 1, welches über eine lokale Bluetooth-Schnittstelle 3 mit einem zweiten Endgerät 4 in der Form eines Laptops 4 verbunden ist. Das zweite Endgerät 4 ist wiederum über eine weitere drahtlose Schnittstelle 5 mit einem zweiten Netz 6 verbunden, welches in Figur 1 ein WLAN-Netz ist. Zur Authentifikation am WLAN-Netz läuft zwischen dem Laptop 4 und dem Netz 6 ein Authentifikationsprotokoll. Das WLAN-Netz 6 ist wiederum mit einem weiteren Netz 7, welches beispielsweise das Internet ist, verbunden. Ebenso ist das Mobiltelefon 1 mit einem Mobilfunknetz 2, beispielsweise einen GSM- oder UMTS-Netz, über eine Luftschnittstelle verbunden. Das Mobiltelefon wird in dem Mobilfunknetz über ein Identitätsmodul identifiziert, welches im Falle von GSM ein SIM-Modul und im Falle von UMTS ein USIM-Modul ist. Zur Kommunikation des Mobiltelefons mit dem Mobilfunknetz werden ein oder mehrere erste Sitzungsschlüssel verwendet, die in dem Identitätsmodul des Mobiltelefons erzeugt werden. Analog werden zur Kommunikation zwischen dem Laptop 4 und dem WLAN-Netz 6 ein oder mehrere zweite Sitzungsschlüssel verwendet.

Im Szenario der Figur 1 soll einem Benutzer des Mobiltelefons ermöglicht werden, sich über das Laptop 4 mit Hilfe der im Identitätsmodul des Mobiltelefons erzeugten ersten Sitzungsschlüssel am WLAN-Netz zu authentifizieren. Hierzu werden die zweiten Sitzungsschlüssel aus den ersten Sitzungsschlüsseln abgeleitet. Problematisch ist hierbei ein Angriff, bei dem der Angreifer Kontrolle über das Laptop 4 enthält, wenn die ersten Sitzungsschlüssel über die Bluetooth-Schnittstelle 3 an das Laptop 4 übertragen werden und in dem Laptop abgeleitet werden. In diesem Fall würde der Angreifer Kenntnis von den ersten Sitzungsschlüsseln erhalten und könnte daher den Benutzer im Mobilfunknetz 2 impersonieren. Um solche Angriffe zu vermeiden, werden gemäß dem erfindungsgemäßen Datensicherungsverfahren die zweiten Sitzungsschlüssel nicht im Laptop 4, sondern bereits im Mobiltelefon 1 aus den ersten Sitzungsschlüsseln abgeleitet. Die abgeleiteten zweiten Sitzungsschlüssel werden dann über die Bluetooth-Schnittstelle 3 mittels eines Sicherheitsprotokolls an das Laptop übermittelt, das mit Hilfe dieser zweiten Sitzungsschlüssel oder mit Hilfe von aus den zweiten Sitzungsschlüsseln abgeleiteten weiteren Schlüsseln die Authentifikation an dem WLAN-Netz mittels des Authentifikationsprotokolls durchführt. Somit sind die ersten Sitzungsschlüssel nicht mehr im Laptop gespeichert, so dass ein Angreifer, der Kontrolle über das Laptop erhält, nicht die Möglichkeit hat, eine Mobilfunkverbindung mittels der ersten Sitzungsschlüssel aufzubauen.

Im folgenden wird die Erfindung im Detail anhand von zwei Ausführungsbeispielen beschrieben, wobei im ersten Ausführungsbeispiel als erstes Endgerät ein GSM-Mobiltelefon mit SIM-Modul und im zweiten Ausführungsbeispiel ein UMTS-Mobiltelefon mit USIM-Modul betrachtet wird.

In dem ersten Ausführungsbeispiel wird als Authentifikationsprotokoll zur Authentifikation am WLAN-Netz das aus dem Stand der Technik bekannte EAP-SIM-Protokoll (siehe [1]) verwendet. Es wird davon ausgegangen, dass sich das SIM-Modul des Mobiltelefons nur an einer sog. "Full Authentication" (siehe Dokument [1], Abschnitt 3) beteiligt, und nicht an einer sog. "Re-Authentication" (siehe Dokument [1], Abschnitt 4.3). Der genaue Nachrichtenfluss des Authentifikationsprozesses ist in Abschnitt 3 des Dokuments [1] (siehe insbesondere Figur 1) erläutert. Es laufen zur Authentifikation folgende Schritte ab:

Das Mobiltelefon 1 erhält vom Laptop 4 die Protokollidentität (EAP-SIM), zwei oder drei GSM-Challenges RAND, sowie die Parameter "Identity", "NONCE_MT", "Version List" und "Selected Version". Die Parameter "Identity", "NONCE_MT", "Version List" und "Selected Version" sind in den Dokument [1] näher beschrieben. Das Mobiltelefon gibt nacheinander jedes der erhaltenen RAND an sein SIM-Modul weiter. Das nächste RAND kann erst an das SIM-Modul weitergegeben werden, wenn die Antwort von dem Modul für das vorige RAND erfolgt ist.

Auf dem SIM-Modul werden für jedes RAND folgende Funktionen ausgeführt:

Ausführung der GSM-Algorithmen A3/A8, wie in [4] beschrieben, d.h. Ableitung einer Response SRES und eines GSM-Sitzungsschlüssels Kc. Die Parameter SRES und Kc werden von der SIM an das Mobiltelefon übergeben. Das Mobiltelefon besitzt somit nach Abschluss der Kommunikation mit der SIM zwei oder drei Responses SRES und zwei oder drei Sitzungsschlüssel Kc, je nach Anzahl der erhaltenen RAND. Die Sitzungsschlüssel Kc stellen die ersten Sitzungsschlüssel im Sinne der Ansprüche dar.

Das Mobiltelefon berechnet daraufhin den EAP-SIM Master Key MK - wie in [1], Abschnitt 4.6 beschrieben - gemäß folgender Formel (MK stellt hierbei einen zweiten Sitzungsschlüssel im Sinne der Ansprüche dar):

$$MK = SHA1(Identity|n*Kc| \; NONCE\_MT| \; Version \; List| \; Selected \; Version)$$

und sendet MK und die Responses SRES an den Laptop.

In der obigen Formel bedeutet "|" Verkettung. Identity bedeutet die Peer-Identity des String ohne die Null-Zeichen am Ende. Es handelt sich hier um die Identität von dem AT_IDENTITY Attribut von dem letzten EAP-Response/SIM/Start-Paket, oder, falls keine AT_IDENTITY verwendet wurde, um die Identität von dem EAP-Response/Identity-Paket. Der Identitätsstring wird ohne Veränderungen verwendet und umfasst die mögliche Identitätsdekoration. Die Notation n*KC bezeichnet die n verketteten Kc-Werte. Die Kc-Schlüssel werden in der gleichen Reihenfolge wie die RAND-Challenges in dem AT_RAND Attribut verwendet. NONCE_MT bezeichnet die NONCE_MT-Werte (nicht das AT_NONCE_MT-Attribut, sondern nur den NONCE-Wert). Die "Version List" umfasst 2 Byte-Versionsnummern von der AT_VERSION_LIST, und zwar in derselben Reihenfolge wie in dem Attribut. Die "Selected Version" ist eine 2 Byte-Version von AT_SELECTED_VERSION. Die Netzwerk-Byte-Ordnung wird verwendet, genauso wie in den Attributen. Die Hash-Funktion SHA-1 ist in [5] spezifiziert. Falls mehrere EPA/SIM/Start-Schleifen in einem EAP/SIM-Austausch verwendet werden, werden die Parameter NONCE_MT, "Version List" und "Selected Version" von der letzten EAP/SIM/Start-Schleife verwendet und die früheren EAP/SIM/Start-Schleifen werden ignoriert.

Der Laptop berechnet dann alle weiteren Schlüssel aus MK, insbesondere sog. "session keys". Der Laptop führt auch die in Figur 1 im Abschnitt 3 des Dokuments [1] gezeigte Prüfung "verifies AT_MAC" durch. Die Schlüsselableitung zur Berechnung von MK aus den Sitzungsschlüsseln Kc reicht aus, um zu verhindern, dass der Laptop Rückschlüsse auf die Sitzungsschlüssel Kc ziehen kann.

Zur Übertragung der Parameter, die zur Berechnung des Master Keys im Mobiltelefon 1 benötigt werden, wird ein erweitertes Bluetooth-SIM-Access-Profile verwendet. Hierzu wird die im bestehenden SIM-Access-Profile verwendete Nachricht "TRANSFER_APDU_REQ" um die Parameter "AuthProt", "EAP-Id", "NONCE_MT", "Version List" und "Selected Version" erweitert. Die Übertragung der EAP-Id ist optional, wenn das Mobiltelefon die EAP-Id aus eigenen Daten ableiten kann. Ferner sind zwei oder drei GSM-Challenges RAND zu übertragen. Die Übertragung dieser Challenges ist schon im Dokument [3] berücksichtigt.

Im folgenden werden die im erweiterten Bluetooth SIM Access Profile verwendeten Parameter näher definiert:

Parameter: AuthProt

Dieser Parameter zeigt das verwendete Authentifikationsprotokoll an.
Länge: 1 byte
Parameter ID: von der Bluetooth Special Interest Group (SIG) zu definieren (nicht für die Erfindung wesentlich) Parameterwerte: EAP-SIM Value=0x01

Parameter: EAP-Id

Dieser Parameter enthält die in der Ableitung des Master Keys verwendete EAP-Identität des Benutzers (permanent identity oder pseudonym identity im Sinne von [1], Abschnitt 4.6).
Länge: variabel
Parameter ID: von der Bluetooth Special Interest Group (SIG) zu definieren (nicht für die Erfindung wesentlich) Parameterwerte: Geeignete Codierung der EAP-Identität (Codierung ist für die Erfindung nicht wesentlich)

Parameter: "NONCE_MT"

Dieser Parameter enthält den in der Ableitung des Master Keys verwendeten NONCE_MT-Wert des EAP-Peers (im Sinne von [1], Abschnitt 4.6).
Länge: 16 byte
Parameter ID: von der Bluetooth Special Interest Group (SIG) zu definieren,(nicht für die Erfindung wesentlich) Parameterwerte: Geeignete Codierung von NONCE_MT (Codierung ist nicht für die Erfindung wesentlich)

Parameter: "Version List",

Dieser Parameter enthält die in der Ableitung des Master Keys verwendete Version List (im Sinne von [1], Abschnitt 4.6).
Länge: 2 byte
Parameter ID: von der Bluetooth Special Interest Group (SIG) zu definieren (nicht für die Erfindung wesentlich) Parameterwerte: Geeignete Codierung von Version List (Codierung ist nicht für die Erfindung wesentlich)

Parameter: "Selected Version",

Dieser Parameter enthält die in der Ableitung des Master Keys verwendete Selected Version des EAP-Peers (im Sinne von [1], Abschnitt 4.6).
Länge: 2 byte
Parameter ID: von der Bluetooth Special Interest Group (SIG) zu definieren (nicht für die Erfindung wesentlich) Parameterwerte: Geeignete Codierung von Selected Version (Codierung ist für die Erfindung nicht wesentlich)
Die Nachricht "TRANSFER_APDU_ RESP" ist in der gegenwärtigen Spezifikation des SIM Access Profiles enthalten (siehe [3], Abschnitt 5.2). Diese Nachricht ist um den Parameter "MK" zu erweitern. Ferner sind zwei oder drei GSM responses SRES zu übertragen. Die Übertragung der GSM responses ist schon in [3] berücksichtigt.

Parameter: MK

Dieser Parameter enthält den im Mobiltelefon gemäß [1], Abschnitt 4.6 berechneten Master Key.
Länge: 20 bytes.
Parameter ID: von der Bluetooth Special Interest Group (SIG) zu definieren (nicht für die Erfindung wesentlich) Parameterwerte: Geeignete Codierung des Master Key MK (Codierung ist nicht für die Erfindung wesentlich)
Bei der Verwendung eines UMTS-Mobiltelefons wird als Authentifikationsprotokoll zur Authentifikation im WLAN-Netz 6 das aus dem Stand der Technik bekannte EAP-AKA-Protokoll verwendet (siehe Dokument [2]). Die Authentifikation läuft hierbei wie in [2], Abschnitt 3 (siehe dort insbesondere die Figur) ab. Es wird angenommen, dass das USIM-Modul und das Mobiltelefon nur an einer "Full Authentication" (siehe Dokument [2], Abschnitt 3) und nicht an einer "Re-Authentication" (siehe [2], Abschnitt 4.2) beteiligt sind. Das Mobiltelefon führt folgende Funktionen aus, wobei die nachstehend genannten Parameter im Dokument [2] näher beschrieben sind:

Das Mobiltelefon erhält vom Laptop die Protokollidentität (EAP-AKA), die AKA-Challenge RAND|AUTN, sowie den Parameter "Identity", und gibt RAND und AUTN an das USIM-Modul weiter. Der Parameter "Identity" bezeichnet hierbei die vom Benutzer in EAP verwendete Identität, wie in [2], Abschnitt 4.5, näher beschrieben ist.

Auf der USIM werden folgenden Funktionen ausgeführt: Ausführung der UMTS-Algorithmen f1 bis f5 und f5*, wie in [6] beschrieben, insbesondere Verifikation von AUTN und MAC und Ableitung der Response RES und der AKA-Sitzungschlüssel CK und IK, welche die ersten Sitzungsschlüssel im Sinne der Ansprüche darstellen. Die Parameter RES, CK und IK werden von dem USIM-Modul an das Mobiltelefon übergeben.

Das Mobiltelefon berechnet daraufhin den EAP-AKA Master Key MK - wie in [2], Abschnitt 4.5 beschrieben - gemäß folgender Formel (MK stellt hierbei einen zweiten Sitzungsschlüssel im Sinne der Ansprüche dar):

$$MK = SHA1(Identity|IK|CK)$$

und sendet MK und RES an den Laptop.

In der obigen Formal bedeutet "|" Verkettung. Identity bezeichnet den Peer-Identity-String ohne die Null-Zeichen am Ende. Diese Identität ist die Identität von dem AT_IDENTITY Attribut von dem letzten EAP-Response/AKA-Identity-Paket oder, falls die AT_IDENTITY nicht verwendet wurde, die Identität von dem EAP-Response/Identity-Paket. Der Identity-String wird ohne Veränderungen einbezogen und umfasst nur die mögliche Identitätsdekoration. Die Hash-Funktion SHA-1 ist in [5] spezifiziert.

Der Laptop berechnet dann alle weiteren Schlüssel aus MK, insbesondere die in der Figur in Abschnitt 3 von [2] erwähnten "session keys". Die Schlüsselableitung zur Berechnung von MK aus CK und IK reicht aus, um zu verhindern, dass der Laptop Rückschlüsse auf CK und IK ziehen kann.

Zur Übertragung der Parameter, die für die Berechnung des Master Kkeys im Mobiltelefon benötigt werden, wird ein erweitertes Bluetooth SIM Access Protocol definiert, mit dem die Parameter über die lokale Bluetooth-Schnittstelle übertragen werden. Im folgenden werden die im erweiterten Bluetooth SIM Access Profile verwendeten Parameter näher definiert:

Die Nachricht "TRANSFER_APDU_ REQ" ist in der gegenwärtigen Spezifikation des SIM Access Profiles enthalten, siehe [3], Abschnitt 5.2. Diese Nachricht ist um die Parameter "AuthProt" und "EAP-Id" zu erweitern. Die Übertragung von EAP-Id ist optional, wenn das Mobiltelefon EAP-Id aus eigenen Daten ableiten kann. Ferner ist die AKA-Challenge RAND|AUTN zu übertragen. Die Übertragung der AKA-Challenge ist schon in [3] berücksichtigt.

Parameter: AuthProt

Dieser Parameter zeigt das verwendete Authentifikationsprotokoll an.
Länge: 1 byte
Parameter ID: von der Bluetooth Special Interest Group (SIG) zu definieren (nicht für die Erfindung wesentlich) Parameterwert: EAP-AKA: Value=0x00

Parameter: EAP-Id

Dieser Parameter enthält die in der Ableitung des Master Keys verwendete EAP-Identität des Benutzers (permanent identity oder pseudonym identity im Sinne von [2], Abschnitt 4.5). Länge: variabel
Parameter ID: von der Bluetooth Special Interest Group (SIG) zu definieren (nicht für die Erfindung wesentlich) Parameterwerte: Geeignete Codierung der EAP-Identität (Codierung ist nicht für die Erfindung wesentlich)

Die Nachricht "TRANSFER_APDU_RESP" ist in der gegenwärtigen Spezifikation des SIM Access Profiles enthalten, siehe [3], Abschnitt 5.2. Diese Nachricht ist um den Parameter "MK" zu erweitern. Ferner ist die AKA response RES zu übertragen. Die Übertragung der AKA response ist schon in [3] berücksichtigt.

Parameter: MK

Dieser Parameter enthält den im Mobiltelefon nach [2], Abschnitt 4.5. berechneten Master Key.
Länge: 20 byte
Parameter ID: von der Bluetooth Special Interest Group (SIG) zu definieren (nicht für die Erfindung wesentlich) Parameterwerte: Geeignete Codierung des Master Key MK (Codierung ist nicht für die Erfindung wesentlich)

Literaturverzeichnis:

[1] H. Haverinen, J. Salowey "EAP SIM Authentication", Internet Draft, draft-haverinen-pppext-eap-sim-12, Oktober 2003; http://www.ietf.org/internet-drafts/draft-haverinen-pppext-eap-sim-12.txt

[2] J. Arkko, H. Haverinen, "EAP AKA Authentication", Internet Draft, draft-arkko-pppext-eap-aka-11, Oktober 2003; http://www.ietf.org/internet-drafts/draft-arkko-pppext-eap-aka-11.txt

[3] "SIM access via 'SIM Access Profile' and Bluetooth link", Beitrag S3-030436 zum 3GPP meeting SA3#29, San Francisco, 15.-18. Juli 2003; ftp://ftp.3gpp.org/TSG_SA/WG3_Security/TSGS3_29_SanFran/Docs/ZIP/S3-030436.zip; revidierte Fassung von Version 0.95VD_d, Anhang att2

[4] GSM Technical Specification GSM 03.20 (ETSI TS 100 929): "Digital cellular telecommunication system (Phase 2+); Security related network functions", European Telecommunications Standards Institute, Juli 1999

[5] Federal Information Processing Standard (FIPS) Publication 180-1, "Secure Hash Standard", National Institute of Standards and Technology, U.S. Department of Commerce, April 17, 1995

[6] 3GPP Technical Specification 3GPP TS 33.102 V5.3.0: "Technical Specification Group Services and System Aspects; 3G Security; Security Architecture (Release 5)", 3rd Generation Partnership Project, September 2003; ftp://ftp.3gpp.org/Specs/latest/Rel-5/33_series/

**Patentansprüche**

**1.** Verfahren zur Sicherung des Datenverkehrs zwischen einem ersten Endgerät (1) und einem ersten Netz (2) sowie einem zweiten Endgerät (4) und einem zweiten Netz (6), wobei das erste Endgerät (1) mithilfe eines oder mehrerer für das zweite Endgerät nicht verfügbarer, erster Sitzungsschlüssel in einem ersten Netz (2) kommunizieren kann und das zweite Endgerät (4) mithilfe eines oder mehrerer zweiter Sitzungsschlüssel in einem zweiten Netz (6) kommunizieren kann,
**gekennzeichnet durch** folgende Schritte:

- das erste Endgerät (1) wird mit dem zweiten Endgerät (4) über eine lokale Schnittstelle (3) verbunden;
- im ersten Endgerät (1) werden der oder die ersten Sitzungsschlüssel ermittelt und der oder die zweiten Sitzungsschlüssel aus den ersten Sitzungsschlüsseln abgeleitet;
- der oder die zweiten Sitzungsschlüssel werden über die lokale Schnittstelle (3) mittels eines Sicherheitsprotokolls an das zweite Endgerät (4) übertragen;
- das zweite Endgerät (4) wird mithilfe des oder der zweiten Sitzungsschlüssel und/oder mithilfe aus dem oder den zweiten Sitzungsschlüsseln abgeleiteter Schlüssel über ein Authentifikationsprotokoll an dem zweiten Netz (6) authentifiziert.

**2.** Verfahren nach Anspruch 1, bei dem als Teil des Authentifikationsprotokolls die aus dem oder den zweiten Sitzungsschlüsseln abgeleiteten Schlüssel erzeugt werden und zum Schutz der Nachrichten des Authentifikationsprotokolls und/oder zum Schutz der Kommunikation im zweiten Netz eingesetzt werden.

**3.** Verfahren nach Anspruch 1 oder 2, bei dem das erste Netz (2) ein GSM-Netz ist und der oder die ersten Sitzungsschlüssel in einem SIM (SIM = Subscriber Identity Module) auf dem ersten Endgerät (1) erzeugt werden.

**4.** Verfahren nach Anspruch 3, bei dem das Authentifikationsprotokoll EAP-SIM (EAP = Extensible Authentication Protocol; SIM = Subscriber Identity Module) ist.

**5.** Verfahren nach Anspruch 1 oder 2, bei dem das erste Netz (1) ein UMTS-Netz ist und der oder die ersten Sitzungsschlüssel in einem USIM (USIM = Universal Subscriber Identity Module) auf dem ersten Endgerät (1) erzeugt werden.

**6.** Verfahren nach Anspruch 5, bei dem das Authentifikationsprotokoll EAP-AKA (EAP = Extensible Authentication Protocol; AKA = Authentication Key Agreement) ist.

**7.** Verfahren nach einem der vorhergehenden Ansprüche, bei dem die lokale Schnittstelle (3) eine drahtlose Schnittstelle, insbesondere eine Bluetooth- und/oder Infrarot-Schnittstelle ist.

**8.** Verfahren nach einem der vorhergehenden Ansprüche, bei dem ein Teil des zweiten Netzes (6) ein lokales Netz, insbesondere ein LAN- und/oder WLAN-Netz ist.

9. Verfahren nach einem der vorhergehenden Ansprüche, bei dem das Sicherheitsprotokoll derart ausgestaltet ist, dass:

   - eine erste Signalisierungsnachricht von dem zweiten Endgerät (4) zu dem ersten Endgerät (1) gesendet wird, wobei mit der ersten Signalisierungsnachricht die Ableitung des oder der zweiten Sitzungsschlüssel aus den ersten Sitzungsschlüsseln im ersten Endgerät (1) ausgelöst wird;
   - in Antwort auf die erste Signalisierungsnachricht eine zweite Signalisierungsnachricht von dem ersten Endgerät (1) zu dem zweiten Endgerät (4) gesendet wird, wobei mit der zweiten Signalisierungsnachricht der oder die zweiten Sitzungsschlüssel übermittelt werden.

10. Verfahren nach einem der vorhergehenden Ansprüche, bei dem mit der ersten Signalisierungsnachricht Parameter aus dem Authentifikationsprotokoll übertragen werden.

11. Verfahren nach Anspruch 9 oder 10, bei dem das Sicherheitsprotokoll ein erweitertes Bluetooth-SIM-Access-Profile-Protokoll ist, das die erste und die zweite Signalisierungsnachricht enthält.

12. Endgerät, welches derart ausgestaltet ist, dass es im Verfahren nach einem der vorhergehenden Ansprüche als erstes Endgerät (1) eingesetzt werden kann.

13. Endgerät nach Anspruch 12, wobei das Endgerät Mittel zum Ermitteln des oder der ersten Sitzungsschlüssel und Mittel zum Ableiten des oder der zweiten Sitzungsschlüssel aus den ersten Sitzungsschlüsseln aufweist.

14. Endgerät, welches derart ausgestaltet ist, dass es im Verfahren nach einem der Ansprüche 1 bis 11 als zweites Endgerät eingesetzt werden kann.

## Claims

1. Method for safeguarding data traffic between a first terminal (1) and a first network (2) and a second terminal (4) and a second network (6), with the first terminal (1) being able to communicate with the aid of one or more first session keys, which are not available to the second terminal, in a first network (2) and the second terminal (4) being able to communicate with the aid of one or more second session keys in a second network (6),
   **characterised by** the following steps:

   - the first terminal (1) is connected to the second terminal (4) via a local interface (3);
   - the first session key(s) is/are determined in the first terminal (1) and the second session key(s) is/are derived from the first session keys;
   - the second session key(s) is/are transmitted via the local interface (3) by means of a security protocol to the second terminal (4);
   - the second terminal (4) is authenticated to the second network (6) by means of an authentication protocol with the aid of the second session key(s) and/or with the aid of keys derived from the second session key(s).

2. Method according to claim 1, in which the keys derived from the second session key(s) are generated as part of the authentication protocol and used to protect the messages of the authentication protocol and/or to protect communication in the second network.

3. Method according to claim 1 or 2, in which the first network (2) is a GSM network and the first session key(s) is/are generated in a SIM (SIM = Subscriber Identity Module) on the first terminal (1).

4. Method according to claim 3, in which the authentication protocol is an EAP-SIM (EAP = Extensible Authentication Protocol; SIM = Subscriber Identity Module).

5. Method according to claim 1 or 2, in which the first network (1) is a UMTS network and the first session key(s) is/are generated in a USIM (USIM = Universal Subscriber Identity Module) on the first terminal (1).

6. Method according to claim 5, in which the authentication protocol is an EAP-AKA (EAP = Extensible Authentication Protocol; AKA = Authentication Key Agreement).

7. Method according to one of the preceding claims, in which the local interface (3) is a wireless interface, in particular a Bluetooth and/or infrared interface.

8. Method according to one of the preceding claims, in which part of the second network (6) is a local network, in particular a LAN and/or WLAN network.

9. Method according to one of the preceding claims, in which the security protocol is configured such that:

   - a first signalling message from the second terminal (4) is sent to the first terminal (1), wherein the derivation of the second session key(s) from the first session keys is initiated with the first signalling message in the first terminal (1);
   - a second signalling message is sent from the first terminal (1) to the second terminal (4) in response to the first signalling message, wherein the second session key(s) are transmitted with the second signalling message.

10. Method according to one of the preceding claims, in which parameters from the authentication protocol are transmitted with the first signalling message.

11. Method according to claim 9 or 10, in which the security protocol is an extended Bluetooth SIM Access Profile protocol, containing the first and second signalling messages.

12. Terminal, configured such that it can be used as the first terminal (1) in the method according to one of the preceding claims.

13. Terminal according to claim 12, wherein the terminal has means to determine the first session key(s) and means for deriving the second session key(s) from the first session keys.

14. Terminal, configured such that it can be used as the second terminal in the method according to one of claims 1 to 11.

**Revendications**

1. Procédé de sécurisation de transfert de données entre un premier terminal (1) et un premier réseau (2) ainsi qu'entre un second terminal (4) et un second réseau (6), le premier terminal (1) pouvant communiquer, au moyen d'une ou plusieurs premières clés de session non accessibles au second terminal, dans un premier réseau (2) et le second terminal (4) pouvant communiquer, au moyen d'une ou plusieurs secondes clés de session, dans un second réseau (6),
   **caractérisé en ce qu'**il comprend les étapes suivantes :

   - le premier terminal (1) est relié au second terminal (4) via une interface locale (3),
   - la ou les premières clés de session sont déterminées dans le premier terminal (1), et la ou les secondes clés de session sont dérivées des premières clés de session, et
   - la ou les secondes clés de session sont transmises au second terminal (4) via l'interface locale (3) au moyen d'un protocole de sécurité, et
   - le second terminal (4) est authentifié au niveau du second réseau (6) au moyen de la ou des secondes clés de session et/ou au moyen de clés dérivées de la ou des secondes clés de session, via un protocole d'authentification.

2. Procédé selon la revendication 1, dans lequel les clés dérivées de la ou des secondes clés de session sont générées en tant que partie du protocole d'authentification et sont utilisées pour protéger les messages du protocole d'authentification et/ou pour protéger la communication dans le second réseau.

3. Procédé selon la revendication 1 ou 2, dans lequel le premier réseau (2) est un réseau GSM et la ou les premières clés de session sont générées dans un module SIM (module d'identité d'abonné) sur le premier terminal (1).

4. Procédé selon la revendication 3, dans lequel le protocole d'authentification est un protocole EAP-SIM (EAP = protocole d'authentification extensible, SIM = module d'identité d'abonné).

**5.** Procédé selon la revendication 1 ou 2, dans lequel le premier réseau (1) est un réseau UMTS et la ou les premières clés de session sont générées dans un module USIM (module d'identité universel d'abonné) sur le premier terminal (1).

**6.** Procédé selon la revendication 5, dans lequel le protocole d'authentification est un protocole EAP-AKA (EAP = protocole d'authentification extensible, AKA = agrément d'authentification de clé).

**7.** Procédé selon l'une quelconque des revendications précédentes, dans lequel l'interface locale (3) est une interface sans fil, notamment une interface Bluetooth et/ou une interface infrarouge.

**8.** Procédé selon l'une quelconque des revendications précédentes, dans lequel une partie du second réseau (6) est un réseau local, notamment un réseau LAN et/ou WLAN.

**9.** Procédé selon l'une quelconque des revendications précédentes, dans lequel le protocole de sécurité est conçu de manière à ce que :

- un premier message de signalisation est envoyé du second terminal (4) au premier terminal (1), et la dérivation de la ou des secondes clés de session à partir des premières clés de session dans le premier terminal (1) est déclenchée avec le premier message de signalisation, et
- en réponse au premier message de signalisation, un second message de signalisation est envoyé par le premier terminal (1) au second terminal (4), et la ou les secondes clés de session sont transmises avec le second message de signalisation.

**10.** Procédé selon l'une quelconque des revendications précédentes, dans lequel des paramètres du protocole d'authentification sont transmis avec le premier message de signalisation.

**11.** Procédé selon la revendication 9 ou 10, dans lequel le protocole de sécurité est un protocole Bluetooth Sim-Access-Profile (profil d'accès à une carte SIM) élargi, qui contient le premier et le second messages de signalisation.

**12.** Terminal, qui est conçu de telle sorte qu'il peut être utilisé dans le procédé selon l'une quelconque des revendications précédentes en tant que premier terminal (1).

**13.** Terminal selon la revendication 12, dans lequel le terminal comprend un moyen pour déterminer la ou les premières clés de session et un moyen pour dériver la ou les secondes clés de session à partir des premières clés de session.

**14.** Terminal, qui est conçu de telle sorte qu'il peut être utilisé dans le procédé selon l'une quelconque des revendications 1 à 11 en tant que second terminal.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur

- **H. HAVERINEN ; J. SALOWEY.** EAP SIM Authentication. *Internet Draft,* Oktober 2003, http://www.ietf.org/internet-drafts/draft-haverinen-pppext-eap-sim-12.txt
- **J. ARKKO ; H. HAVERINEN.** EAP AKA Authentication. *Internet Draft,* Oktober 2003, http://www.ietf.org/internet-drafts/draft-arkko-pppext-eap-aka-11.txt
- SIM access via 'SIM Access Profile' and Bluetooth link. *Beitrag S3-030436 zum 3GPP meeting SA3#29,* 15. Juli 2003, ftp://ftp.3gpp.org/TSG_SA/WG3_Security/TSGS3_29_SanFran/ Docs/ZIP/S3-030436.zip
- Secure Hash Standard. Federal Information Processing Standard (FIPS) Publication 180-1. U.S. Department of Commerce, 17. April 1995
- Technical Specification Group Services and System Aspects; 3G Security; Security Architecture (Release 5). *Generation Partnership Project,* September 2003, ftp://ftp.3gpp.org/Specs/latest/Rel-5/33_series